**Europäisches Patentamt**

**European Patent Office**

**Office européen des brevets**

(19)

(11) Veröffentlichungsnummer: **0 263 930**
**B1**

(12)
# EUROPÄISCHE PATENTSCHRIFT

(45) Veröffentlichungstag der Patentschrift:
**10.10.90**

(51) Int. Cl.⁵: **B01D 45/10**

(21) Anmeldenummer: **87110793.4**

(22) Anmeldetag: **24.07.87**

(54) **Flüssigkeitsabscheider.**

(30) Priorität: **14.08.86 DE 3627555**

(43) Veröffentlichungstag der Anmeldung:
**20.04.88 Patentblatt 88/16**

(45) Bekanntmachung des Hinweises auf die Patenterteilung:
**10.10.90 Patentblatt 90/41**

(84) Benannte Vertragsstaaten:
**AT BE CH DE ES FR GB GR IT LI LU NL SE**

(56) Entgegenhaltungen:
**DE-A- 2 628 628**
**DE-U- 7 326 398**

**CHEMIE-INGENIEUR-TECHNIK, Band 44, Nr. 8, 1972, Seiten 503-509, Weinheim; A. BÜRKHOLZ et al.: "Tropfenabscheider"**

(73) Patentinhaber: **Wurz, Dieter, Prof. Dr.-Ing., Riefstahlstrasse 6, D-7500 Karlsruhe(DE)**

(72) Erfinder: **Wurz, Dieter, Prof. Dr.-Ing., Riefstahlstrasse 6, D-7500 Karlsruhe(DE)**
Erfinder: **Zimmermann, Max, Dipl.-Ing., Rudolfstrasse 7, D-7500 Karlsruhe(DE)**

(74) Vertreter: **Liesegang, Roland, Dr.-Ing., FORRESTER & BOEHMERT Widenmayerstrasse 4 Postfach 22 01 37, D-8000 München 22(DE)**

## Beschreibung

Die Erfindung betrifft einen Flüssigkeitsabscheider mit den Merkmalen des Oberbegriffs des Anspruchs 1.

Bei einem bekannten Flüssigkeitsabscheider dieser Art (GB-A 1 465 044) sind die aus den Leitblechen und Fangtaschen gebildeten "Filmfallen" auf den konvexen Abschnitten der Kanalwände an den Umlenkungen und damit so angeordnet, daß die mitgeführten Tropfen einer Zentrifugalbeschleunigung ausgesetzt sind, welche einen Teil der Tropfen nicht in die Fangtasche sondern auf die gegenüberliegenden Kanalwände lenkt.

Es ist ein weiterer Flüssigkeitsabscheider bekannt (DE-C 2 336 447), bei dem der Kanal aus benachbarten, parallelen Profilen mit mehreren aufeinanderfolgenden Umlenkungen und Fangtaschen ausgestaltet ist. Auf der konvexen Seite jeder Umlenkung ist eine Fangtasche angeordnet. In die in Strömungsrichtung gesehen beiden ersten Umlenkungen sind Leitbleche hineingebogen, die sich bis in die Fangtaschen hinein erstrecken. Mit anderen Worten überlappen die Fangtaschen die freien Enden der Leichtbleche. Bei dieser Anordnung ist das Leitblech zu nahe an die Staukante des freien Endes der Fangtasche herangeführt. Der auf dem Leitblech ankommende Film muß die strömungstote Zone mit Druckanstieg vor der Fangtasche überwinden, um ins Innere der Fangtasche zu gelangen. Dabei verliert der Film einen Großteil seiner kinetischen Energie und verdickt sich aus Gründen der Kontinuität. Die Anordnung an den ersten Umlenkungen neigt daher zum Verstopfen der Eintrittsöffnungen. Hat sich einmal eine Flüssigkeitsbrücke in der Eintrittsöffnung gebildet, werden nachfolgende Flüssigkeitsanteile über die verstopfte Eintrittsöffnung hinweggeschleppt.

Den weiter stromabwärts angebrachten Fangtaschen sind Leitbleche vorgelagert, deren Ablösekante vor der zugehörigen Fangtasche liegt. Da aber die Ablösekante nicht ins Innere der Fangtasche gerichtet ist, wird ein nicht unerheblicher Anteil des sich ablösenden Films um die Fangtasche herumgeführt.

Aufgrund dieser Erscheinungen wird die maximale Entwässerungskapazität des bekannten Abscheiders schon bei kleinen Anströmgeschwindigkeiten erreicht.

Der Erfindung liegt die Aufgabe zugrunde, einen Flüssigkeitsabscheider der eingangs genannten Art so auszubilden, daß die Entwässerungskapazität auch bei großen Strömungsgeschwindigkeiten bei gleichzeitiger Verringerung des Druckverlustes erhöht wird.

Diese Aufgabe wird durch die Merkmale des Kennzeichens des Anspruchs 1 gelöst.

Unter "Geschwindigkeit" versteht der Strömungsfachmann eine vektorielle Größe. Die Tatsache, daß die Gasgeschwindigkeit im Bereich der Öffnung zwischen Leitblech und Fangtasche erfindungsgemäß im wesentlichen konstant gehalten werden soll, bedeutet also, daß die Öffnung in einem Kanalabschnitt ohne Strömungsbeschleunigung (z. B. durch Zentrifugalkräfte), also nicht an einer Umlenkung in einem geradlinigen Abschnitt vorgesehen ist, so daß die Tropfen nicht über die Öffnung hinweg transportiert sondern in diese und damit in die Fangtasche hineinbewegt werden. Optimal ist dabei eine Gestaltung, bei der die Staukante der Fangtasche in geradliniger Verlängerung der Kanalwand vor der Öffnung gelegen ist.

Bei dem Flüssigkeitsabscheider nach der Erfindung verengt die erste Fangtasche den Kanalquerschnitt. Dies verbessert die Primärabscheidung zum einen dadurch, daß die Gas- und damit auch die Tropfengeschwindigkeit erhöht werden, wodurch die auf die Tropfen in der Umlenkung wirkende Zentrifugalkraft erhöht wird, und zum anderen dadurch, daß aufgrund der verringerten Kanalbreite die Tropfen schneller an die Abscheidewand gelangen, so daß auch kleinere Tropfen abgeschieden werden.

Für eine optimale Funktion sind die Gestaltung von Radius, Länge und mittlerem Winkel der Einbiegung des Leitbleches sowie der Kanalbreite s wichtig. Gestaltungskriterien und Grenzen für diese Abmessungen sind in den Unteransprüchen 2 bis 5 angegeben.

Bevorzugt ist die Anwendung eines Flüssigkeitsabscheiders, bei dem der Kanal zwischen benachbarten, parallelen, vertikal angeordneten Profilen mit mehreren aufeinander folgenden Umlenkungen und Fangtaschen ausgebildet ist. In diesem Fall ist vorteilhaft, wenn die in Strömung gesehen erste Fangtasche kein Leitblech aufweist. Weiterhin ist vorteilhaft, wenn jedes Profil eine Verdickung an der Austrittskante zur Vermeidung von Strömungsablösungen der Gasphase im Austrittsbereich aufweist.

Ein gemäß der Erfindung gestalteter Flüssigkeitsabscheider ist also typisch nicht "symmetrisch" zu einer Mittelebene gestaltet. Vielmehr weist der Flüssigkeitsabscheider nach der Erfindung mehrere, unterschiedlich gestaltete Stufen auf, die in optimaler Weise dem Flüssigkeitsangebot in der jeweiligen Stufe angepaßt sind. So sind mit besonderem Vorteil die Eintrittsstufe wie in Anspruch 7 und die Austrittsstufe wie in Anspruch 8 beansprucht anders gestaltet als die Zwischenstufe(n), welche hauptsächlich zum Einleiten des Wandfilms in die Fangtaschen dient (dienen). Ein Großteil der im Gasstrom enthaltenen Flüssigkeit wird von einem Flüssigkeitsabscheider nach der Erfindung dabei bereits in der ersten Stufe auszentrifugiert, indem große Tropfen und Strähnen direkt ins Innere der ersten, leitblechlosen Fangtasche gelangen. Beim Eintritt in die zweite Stufe fällt ein Großteil des noch verbleibenden Wassers als Film an der Innenwand des Kanals an. Der Film wird in eine Fangtasche geführt, wo er dem Kontakt mit der Gasströmung entzogen ist. Außerdem werden noch in der Gasströmung verbliebene Tropfen in der zweiten Stufe weiter auszentrifugiert.

In der Austrittsstufe sollen dann Ablöseerscheinungen vermieden werden, welche den Druckverlust erhöhen würden. Dies geschieht durch Ausgestaltung der Austrittsstufe mit einer Verdickung. Diese Vorrichtung kann als Fangtasche und/oder Kapillardrainage ausgestaltet sein, um zusätzlich verbleibende Restflüssigkeit abzuführen.

Hauptsächlich aus Gründen der Fertigung, aber auch zur weiteren Verbesserung der Wasserabscheidung ist, wie an sich bekannt, hinter jeder Fangtasche eine Sicke vorgesehen, deren Boden eine Verbindung mit einem in Strömungsrichtung anschließenden Teil des Profils erlaubt. Diese Sicke wird von der Strömung aufgrund des sich darin ausbildenden Totwasserwirbels nicht wahrgenommen, so daß die Sicke faktisch keine Kanalerweiterung bewirkt. Die Sicke kann durch eine geneigte Eintrittswand und durch Vorsehen von einer Kapillardrainage erzeugenden Einsätzen oder dgl. ausgestaltet sein.

Bei dem Flüssigkeitsabscheider nach der Erfindung ist die Stauwirkung der Fangtasche auf die Gasströmung minimal, weil die Fangtasche nicht in die Gasströmung hineinragt. Die Gasgeschwindigkeit über der Fangtasche bleibt im wesentlichen konstant, und die den Film antreibende Schubspannung der Gasphase wirkt annähernd bis zur Tropfenablösekante, zumal der Übergang vom Leitblech zur Einbiegung stetig mit einem Radius vorzugsweise gemäß der Formel in Anspruch 3, d. h. ohne einen scharfen Knick erfolgt, an dem die Strömung in unerwünschter Weise vor Erreichen der Ablösekante abreissen könnte.

Die Erfindung ist im folgenden anhand schematischer Zeichnungen an Ausführungsbeispielen mit weiteren Einzelheiten näher erläutert. Es zeigen:

Fig. 1 zwei benachbarte Profile eines erfindungsgemäß ausgebildeten Flüssigkeitsabscheiders im Horizontalschnitt;

Fig. 2 eine Prinzipdarstellung der Gestaltung des Flüssigkeitsabscheiders nach Fig. 1 im Bereich der Fangtaschen, wobei die wesentlichen Abmessungen eingetragen sind;

Fig. 3 und 4 zwei Abwandlungen der Gestaltung im Bereich der Fangtaschen, die ebenfalls zur Erfindung gehören;

Fig. 5 eine Abwandlung der Kanalgestaltung im Bereich der Fangtaschen;

Fig. 6 bis 9 unterschiedliche Ausgestaltungen einer in Strömungsrichtung gesehen hinter der Fangtasche gelegenen Sicke und die

Fig. 10 bis 14 unterschiedliche Ausgestaltungen der letzten Stufe des Flüssigkeitsabscheiders der Erfindung, wobei Fig. 14 eine Schnittdarstellung in Richtung der Pfeile A-B in Fig. 13 ist.

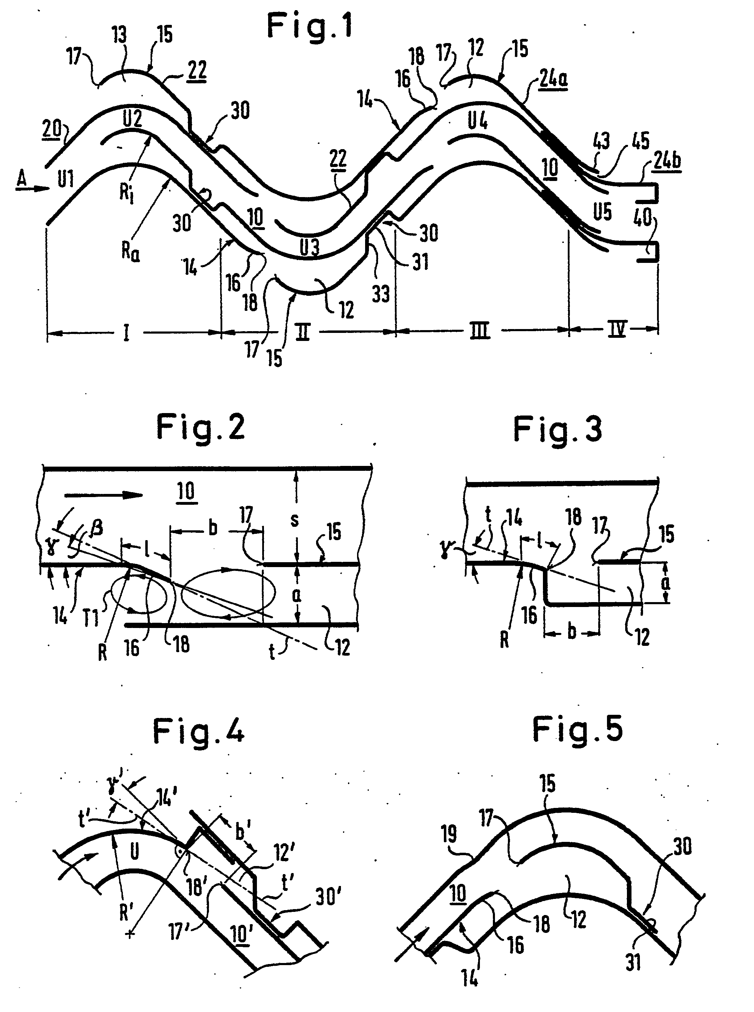

In Fig. 1 sind zwei parallele, benachbarte Profile eines Flüssigkeitsabscheiders im Horizontalschnitt gezeigt, der in einem Naßkühlturm zum Abscheiden der in der Zweiphasenströmung aus Luft und Wasser mitgeführten Tröpfchen dient. Die senkrecht stehenden Profile werden von der Zweiphasenströmung in Fig. 1 gesehen von links in Richtung des Pfeiles A angeströmt. Das abgeschiedene Wasser läuft aufgrund der Schwerkraft senkrecht zur Zeichenebene ab.

Jedes Profil besteht aus insgesamt fünf Einzelteilen aus Blech, die nach ihrer Formgebung zusammengepunktet werden, nämlich einem Eintrittsteil 20, zweimal einem Zwischenteil 22, und einem aus zwei Teilen 24a, 24b bestehenden Austrittsteil.

Zwischen den beiden Profilen ist ein Kanal 10 geformt, der im wesentlichen über seine gesamte Länge gleichbleibenden Querschnitt hat und von dem Gas durchströmt wird. Der Kanal bildet insgesamt fünf Umlenkungen U1 bis U5. Die erste und die letzte Umlenkung U1 und U5 sind in etwa 45°-Umlenkungen, während die Umlenkungen U2, U3, U4 90°-Umlenkungen bilden. Der gezeigte Flüssigkeitsabscheider enthält somit vier Stufen I bis IV wie gezeichnet. Die Anzahl dieser Stufen ist selbstverständlich variabel durch Hinzufügen weiterer Zwischenteile 22, falls erforderlich.

Jedes Profil enthält Fangtaschen 12,13 und in Strömungsrichtung dahinter angeordnete Sicken 30. Mit Ausnahme einer ersten Fangtasche 13 ist vor der auflaufenden Kante 17 jeder Fangtasche 12 ein Leitblech 14 angeordnet, das an seinem Ende eine Einbiegung 16 hat, welche in eine Ablösekante 18 mündet. Die Tangente t an die Einbiegung im Bereich der Ablösekante 18 ist in die Fangtasche 12 hineingerichtet. Die Einbiegung 16 ist nicht scharf vom Leitblech 14 abgeknickt sondern über einen Radius R, wobei der mittlere Winkel β der Einbiegung kleiner oder höchstens gleich dem Winkel γ der Tangente t ist und im Bereich zwischen 7 und 13°, vorzugsweise bei 10° liegt. Die Länge der Einbiegung hat die Größe 1. Die Gestaltung im Bereich der Fangtasche ist besonders deutlich aus Fig 2 erkennbar. Dort sind auch die Maße s für die Kanalbreite und a für die Fangtaschentiefe eingezeichnet, welche nicht kleiner als 4 mm sein soll. Fig 2 macht deutlich, daß die Tangente t in die Tiefe a der Fangtasche 12 in der die auflaufende Kante 17 enthaltenden Querschnittsebene des Kanals 10 fallen sollte.

Die Einbiegung 16 des Leitbleches 14 hat den Zweck, die auf die Kanalwand in Form eines Filmes abgeschiedene Flüssigkeit möglichst vollständig in die Tasche 12 einzuleiten. Nach den Feststellungen der Erfinder muß hierzu ein ausreichender Abstand b vor der auflaufenden Kante 17 eingehalten werden, und es ist zwingend erforderlich, daß die Tangente t an die Einbiegung im Bereich der Ablösekante 18 in die Tasche 12 hineinweist. Im einzelnen ist folgendes zu beachten: Die maximale Länge $1_{max}$ bestimmt sich aus der folgenden Gleichung

$$1_{max} = \dot{m} \cdot \frac{h}{\chi} \cdot \ln \frac{u\,(0)}{u\,(1)}$$

worin u (0) die mittlere Filmgeschwindigkeit vor der Einbiegung und u (1) die mittlere Filmgeschwindigkeit an der Ablösekante und $2,5 < u\,(0)/u\,(1) \leq 3,5$, $\dot{m}$ der breitenspezifische Massenstrom, h die mittlere Filmdicke und die dynamische Zähigkeit der Flüssigkeit sind.

1 sollte dabei im Bereich
$0,2\ 1_{max} < 1 \leq 1_{max}$, vorzugsweise im Bereich
$0,7\ 1_{max} < 1 \leq 1_{max}$
liegen.

Der mittlere Winkel (ß - z) der Einbiegung sollte im Bereich zwischen 7° und 13°, vorzugsweise bei 10° liegen.

Der Krümmungsradius R der Einbiegung berechnet sich dann zu

$$R = \frac{1}{2\sin\beta}$$

Der Abstand zwischen der Ablösekante 18 und der auflaufenden Kante 17 der Fangtasche 12 ergibt sich aus der Beziehung

$$b = K^2 \sin\beta \sqrt{1}$$

worin K eine Konstante ist, die im Bereich zwischen 4 und 6, vorzugsweise bei 5 liegt.

Die Kanalbreite läßt sich aus der Formel

$$s = \sqrt{\frac{\rho \cdot v \cdot T \cdot \alpha}{18 \cdot \eta_G}} \cdot d_{grenz}$$

worin,

v - Anströmgeschwindigkeit,
$\alpha$ - Umlenkwinkel,
T - Teilung der Profile,
$\rho$ - Dichte der Flüssigkeit,
$\eta_G$ - dynamische Zähigkeit des Gases,
$d_{grenz}$ - gewünschter Grenztropfendurchmesser

bedeuten.

Fig. 3 zeigt eine Variante, bei der die oben angegebenen Dimensionierungsvorschriften in gleicher Weise gelten. Unterschiedlich ist hier lediglich, daß die Ablösekante nicht an einer freistehenden Lippe der Einbiegung ausgebildet ist sondern durch einen scharfen Knick eines durchgehenden Bleches.

Bei der Fig. 4, bei der ebenfalls gleiche Bezugszeichen wie in den Fig. 1 bis 3 verwendet sind, ist die Fangtasche abweichend von den bisher beschriebenen Ausführungsbeispielen auf der konkaven Kanalseite 14' auf eine Umlenkung U folgend angeordnet. Prinzipiell gelten hier die gleichen Dimensionierungsvorschriften wie oben erläutert mit Ausnahme der Dimensionierungsvorschrift für die Länge l, die hier nicht vorkommt. Aber auch bei diesem Ausführungsbeispiel hat die Einbiegung, welche hier durch die konkave gekrümmte Kanalwand an der Umlenkung U gebildet ist, an der Ablösekante 18' eine Tangente t', die unter einem Winkel β' geneigt in die nachfolgende, mit einem Abstand b' angeordnete Fangtasche 12' hineinweist. In diesem Fall errechnet sich der Abstand b' aus der Gleichung

b' = R' sin β' (1+1/K')

worin K' = 2 bis 4, vorzugsweise 3 beträgt, β' zwischen 10 bis 20°, vorzugsweise bei 15° liegt und R' der Krümmungsradius der äußeren Umlenkung ist.

Die Ausführung nach Fig. 5 ähnelt derjenigen nach Fig. 1 mit der Abweichung, daß die dem Leitblech 14 mit der Einbiegung 16 gegenüberliegende Kanalwand eine Einbuchtung 19 in den Kanal 10 hinein aufweist, die derart bemessen ist, daß die Gasströmung an der Ablösekante nicht ablöst. Dies bewirkt, daß der Film auf der Einbiegung keinerlei Abbremsung erfährt. Bei dieser Ausführung ist der Konstrukteur in der Wahl der Länge 1 der Einbiegung frei, d. h. nicht streng an die Gleichung für 1 max gemäß Anspruch 2 gebunden.

Bei allen beschriebenen Ausführungen wird der sich auf dem Leitblech 14 abscheidende Flüssigkeitsfilm optimal in die Fangtasche 12 hineintransportiert, wo er dem Kontakt mit der Gasströmung entzogen ist. Dies läßt sich wie folgt begründen:

die Stauwirkung der Fangtasche 12 auf die Gasströmung ist minimal, da sie nicht in die Gasströmung hineinragt. Die Gasgeschwindigkeit über der Öffnung zum Tascheneintritt, der sogenannten "Filmfalle", bleibt im wesentlichen konstant, und die den Film antreibende Schubspannung der Gasphase wirkt annähernd bis zur Ablösekante 18, wozu auch der stetige, knickfreie Übergang des Leitbleches 14 in die Einbiegung 16 sowie der kleine mittlere Einbiegungswinkel zwischen 7° und 13° beiträgt.

Dem an die Ablösekante 18 laufenden Film bieten sich je nach seiner Dicke h bzw. seinem Impuls zwei Möglichkeiten an, um ins Innere der Fangtasche 12 zu gelangen:

a) Mit zunehmender Filmdicke h steigt der Impuls des Filmes als Folge einer abnehmenden Wirkung der Wandbindung an. Ab einer bestimmten Filmdicke h reicht der Impuls aus, die Haltekräfte zu überwinden. Die sich dann bildenden Tropfen sind frei von der Wandreibungskraft und fliegen aufgrund ihrer noch recht hohen kinetischen Energie tief ins Innere der Fangtasche 12. Dieser Vorgang wird durch die Einbiegung sowie dadurch unterstützt, daß die Impulskraft des Films bezüglich der Angriffsstelle der Haltekräfte ein Moment ausübt, das den Film bzw. die abgelösten Tropfen in die Fangtasche lenkt. Die Entstehung eines Totwasserwirbels in der Fangtasche 12 wird durch die eintretende Flüssigkeit weitgehend unterbunden.

b) Übt die Gasströmung nur eine geringe Schubspannung auf den Film aus, oder ist der Filmmassenstrom sehr klein, so reicht der Impuls nicht aus, die Haltekräfte zu überwinden. Der Film läuft dann um die Ablösekante 18 herum und wird dort von dem in der Fangtasche induzierten Totwasserwirbel T1 (vgl. Fig. 2) erfasst und noch weiter nach hinten getrieben. Aufgrund des etwa konstant gehaltenen Kanalquerschnittes behält die mittlere Gasgeschwindigkeit ihren hohen Wert (das ca. 2,5-fache der Anströmgeschwindigkeit v im Eintritt) so daß ein Großteil der noch in der Gasströmung enthaltene Tropfen auszentrifugiert wird.

Die Sicke 30, die sich jeweils hinter der ersten Fangtasche 13 und der zweiten Fangtasche 12 (Stufe II) befindet, wird von der Gasströmung praktisch nicht wahrgenommen. An der Sicke 30 werden die Bauteile 20,22 bzw. 22,22 am Boden 31 der Sicke 30 zusammengepunktet. Die Sicke soll außerdem den geringen Anteil des dort anfallenden Wassers aufnehmen und abführen. Dazu ist die Sicke mit einer um 45° geneigten schrägen Eintrittswand 33 versehen. Diese schräge Eintrittswand begünstigt den Eintritt des Films in die Sicke 30. Der sich in der Sicke ausbildende Totwasserwirbel läßt den Film nicht bis zum Boden 31 der Sicke vordringen. Vielmehr staut sich der Film vor Erreichen des Bodens auf und läuft von dort in Strähnen nach unten ab.

Auch in der Stufe IV ist eine Fangtasche für die Restflüssigkeit in Form einer Verdickng 40 gebildet, die zur Strömungsrichtung hin gewandt hohl ist. Diese Verdickung 40 befindet sich im Austrittsteil 24b. Außer der Abfuhr der geringen Restflüssigkeitsmengen, die teils in der letzten Umlenkung auszentrifugiert wurden, teils von der Gasströmung aus den davorliegenden Wandabschnitten mitgeschleppt wurden und teils durch turbulente Transportvorgänge an die hinteren Wandabschnitte gelangten, trägt die Verdickung 40 zu einer Verringerung der Druckverluste bei.

An der äußeren Kanalwand der Stufe IV befindet sich eine Kapillardrainage 42 in Form einer leichten Abbiegung des Einzelteiles 24a. Die dort ankommenden Flüssigkeitssträhnen laufen in Folge ihrer kinetischen Energie und der Haftwirkung um die Austrittskante der Abbiegung herum und werden dann von den Kapillarkräften ins Innere eines sich verjüngenden Spaltes 45 zwischen der Kapillardrainage 42 und dem Austrittsteil 24b hineingezogen. Der induzierte Totwasserwirbel unterstützt diesen Vorgang. Er treibt sogar Tropfen, die von der Austrittskante der Abbiegung abgelöst werden, in diesen hinein.

Für den geringen Druckverlust des beschriebenen Flüssigkeitsabscheiders ist außer der Verdickung am Austritt die optimale Strömungsführung mit einem abgesehen vom Eintritt und vom Austritt etwa konstanten Querschnitt aufweisenden Strömungskanal ohne in die Strömung hineinragende Fangtaschen verantwortlich. Der Druckverlustbeiwert liegt bei einer gemessenen Ausführung zwischen 4 und 5 und damit wesentlich niedriger als bei bekannten Tropfenabscheidern mit vergleichbarem Abscheidegrad.

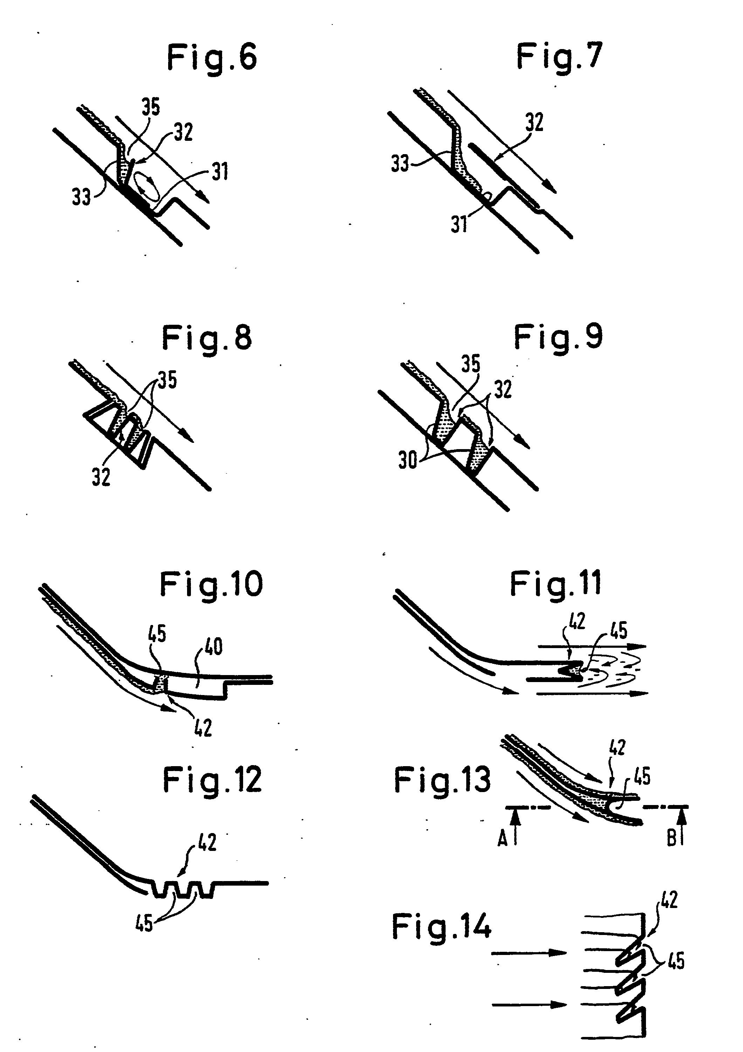

Die Fig. 6 bis 9 zeigen verschiedene Ausführungen der Sicke 30 jeweils mit Kapillardrainagen 32. Bei der Ausführung nach Fig. 6 wird diese Kapillardrainage mit sich verengendem Spalt 35 zwischen den Teilen 32 und 33 gebildet.

Bei der Ausführung nach Fig. 7 wird eine Kapillardrainage 32 durch ein bis nahe an den Beginn der Sicke gezogenes Blech bewirkt. Die so gebildete schmale Eintrittsöffnung für den Flüssigkeitsfilm läßt nur einen sehr schwachen Totwasserwirbel entstehen, was zur Verbesserung der Entwässerungskapazität führt.

Bei der Ausführung nach Fig. 8 ist eine Kapillardrainage 32 in der Sicke durch einen gezackten Einsatz 32 gebildet, der mehrere sich verjüngende Spalte 35 schafft.

Bei der Ausführung nach Fig. 9 ist die Sicke 30 durch zwei schmale Sicken 32 ersetzt, welche die sich verjüngenden Kapillarspalte 35 bilden.

Die Fig. 10 bis 14 zeigen Ausgestaltungen des Austrittsende mit der Verdickung 40.

Bei der Ausführung nach Fig. 10 weist die Kapillardrainage 42 einen Spalt 45 auf, der sich in die Verdickung 40 hinein öffnet.

Bei der Ausführung nach Fig. 11 weist die Kapillardrainage 42 einen Spalt 45 auf, der sich von der Rückseite her in die Verdickung hinein verjüngt.

Bei der Ausführung nach Fig. 12 umfaßt die Kapillardrainage 42 eine Reihe von hintereinander gestaffelt angeordneten Sicken 45.

Bei der Ausführung nach Fig. 13 und 14 umfaßt die Kapillardrainage 42 eine Reihe von quer zur Hinterkante angeordneten Kapillarspalten 45.

Typisch werden Flüssigkeitsabscheider der beschriebenen Art zur Dampftrocknung in Kraftwerken eingesetzt. Aufgrund des verminderten Druckverlustes kommt jedoch nun auch eine Anwendung in Naßkühltürmen in Betracht.

**Patentansprüche**

1. Flüssigkeitsabscheider zum Abscheiden von in einer Zweiphasenströmung (Gas/Flüssigkeit) mitgeführten Flüssigkeitsanteilen, bei dem die Strömung durch einen mit Fangtaschen für die Flüssigkeitsanteile versehenen Kanal hindurchgeleitet wird, wobei den Fangtaschen Leitbleche vorgelagert sind, die an ihren Enden Ablösekanten für die Flüssigkeit aufweisen, wobei die Ablösekante (18) jedes Leitblechs (14) in einem Abstand (b) vor der Staukante (17) der zugehörigen Fangtasche (12) liegt, dadurch **gekennzeichnet**, daß das Ende jedes Leitblechs (14) in Richtung in die Fangtasche (12) hineingewölbt ist derart, daß die Tangente (t) an die Ablösekante (18) des Leitblechs (14) in die Fangtasche (12) hineinweist, daß die Geschwindigkeit mindestens im Bereich der Öffnung zwischen Leitblech und Fangtasche im wesentlichen konstant ist und daß das Leitblech (14) an seinem die Ablösekante (18) aufweisenden Ende eine Einbiegung (16) mit einer Länge (l) aufweist, deren Maximum sich aus der Gleichung

$$l_{max} = \dot{m} \cdot \frac{h}{\eta} \cdot \ln \frac{u\,(0)}{u\,(1)}$$

ermittelt, worin u (0) die mittlere Filmgeschwindigkeit vor der Einbiegung und u (1) die mittlere Filmgeschwindigkeit an der Ablösekante und 2,5 < u (0)/u (1) ≦ 3,5, $\dot{m}$ der breitenspezifische Massenstrom, h die mittlere Filmdicke und η die dynamische Zähigkeit der Flüssigkeit sind und wobei die ausgeführte Länge (1) der Einbiegung (16) im Bereich

0,2 1 max < 1 ≧ 1 max liegt.

2. Flüssigkeitsabscheider nach Anspruch 1, dadurch **gekennzeichnet**, daß die Einbiegung (lt) aus der Strömungsrichtung um einen mittleren Winkel (β) herausgebogen ist, der im Bereich zwischen 7° und 13°, vorzugsweise bei 10°, liegt.

3. Flüssigkeitsabscheider nach Anspruch 2, dadurch **gekennzeichnet**, daß die Einbiegung (16) mit einem Krümmungsradius

$$R = \frac{1}{2\sin\beta}$$

von der Wand abgebogen ist.

4. Flüssigkeitsabscheider nach Anspruch 2 oder 3, dadurch **gekennzeichnet**, daß der Abstand (b) zwischen der Ablösekante (18) und der Kante (17) der Eintrittsöffnung der Fangtasche (12) sich aus der Beziehung

$$b = K^2 \; \sin\beta \, \sqrt{1}$$

bestimmt, worin K eine Konstante ist, die im Bereich zwischen 4 und 6 liegt und vorzugsweise den Wert 5 hat.

5. Flüssigkeitsabscheider nach einem der Ansprüche 1 bis 4, dadurch **gekennzeichnet**, daß die Kanalbreite (s) sich aus der Beziehung

$$s = \sqrt{\frac{\rho \cdot v \cdot T \cdot \alpha}{18 \cdot \eta_G}} \; \cdot \; d_{grenz}$$

bestimmt, worin bedeuten:
v - Anströmgeschwindigkeit
α - Umlenkwinkel,
T - Teilung der Profile,
ρ - Dichte der Flüssigkeit,
η G - dynamische Zähigkeit des Gases,
d grenz - gewünschter Grenztropfendurchmesser.

6. Flüssigkeitsabscheider nach einem der Ansprüche 1 bis 5, dadurch **gekennzeichnet**, daß der Kanal zwischen benachbarten, parallelen, vertikal angeordnet mit mehreren aufeinanderfolgenden Umlenkungen (15) und Fangtaschen (12) ausgestaltet ist, und daß die in Strömungsrichtung gesehen erste Fangtasche (13) kein Leitblech aufweist.

7. Flüssigkeitsabscheider nach Anspruch 6, dadurch **gekennzeichnet**, daß jedes Profil eine Verdickung (40) an der Austrittskante zur Vermeidung von Strömungsablösungen der Gasphase im Austrittsbereich aufweist.

8. Flüssigkeitsabscheider nach Anspruch 7, dadurch **gekennzeichnet**, daß die Verdickung (40) mindestens eine Kapillardrainage (42) aufweist.

9. Flüssigkeitsabscheider nach einem der Ansprüche 1 bis 8, dadurch **gekennzeichnet**, daß die der Einbiegung (16) gegenüberliegende Kanalwand in den Kanal hinein eingebuchtet ist (bei 19), um Strömungsablösungen der Gasphase an der Einbiegung zu verhindern.

10. Flüssigkeitsabscheider nach einem der Ansprüche 6 bis 9, dadurch **gekennzeichnet**, daß in Strömungsrichtung gesehen hinter jeder Fangtasche (12) eine Sicke (30) zum Verbinden von hintereinander angeordneten Profilteilen (20,22,24a,24b) einer Kanalwand und zur zusätzlichen Ableitung abgeschiedener Flüssigkeit vorgesehen ist.

11. Flüssigkeitsabscheider nach Anspruch 10, dadurch **gekennzeichnet**, daß in der Sicke (30) eine Kapillardrainage (32) zur Verbesserung der Flüssigkeitsableitung vorgesehen ist.

12. Flüssigkeitsabscheider nach einem der Ansprüche 6 bis 11, dadurch **gekennzeichnet**, daß er im Baukastensystem aus insgesamt drei unterschiedlichen Blech- oder Kunststoff-Profilteilen (20, 22, 24a, 24b) nämlich einem Eintrittsteil (20), einem Austrittsteil (24a,24b) und einem Zwischenteil (22) aufgebaut ist, das bei mehrstufiger Ausführung mehrfach verwendet ist.

13. Flüssigkeitsabscheider nach Anspruch 8 oder 11, dadurch **gekennzeichnet**, daß die Kapillardrainage (32,42) einen sich nach innen verjüngenden Spalt (35,45) aufweist.

14. Flüssigkeitsabscheider nach Anspruch 1 oder einem der Ansprüche 6 bis 13, dadurch **gekennzeichnet**, daß bei einer Anordnung der Fangtasche (12') auf einer konkaven Kanalseite (14') der Abstand (b') zwischen der Ablösekante (18') und der Kante (17') sich aus der Gleichung

$$b' = R' \cdot \sin\beta' \, (1 + 1/K')$$

bestimmt, worin

R' - Krümmungsradius der äußeren Umlenkung,
β' - der Winkel zwischen der Tangente (t) an die Ablösekante und der Strömungsrichtung nach der Umlenkung im Bereich zwischen 10 und 20°, vorzugsweise bei 15°,
K' - eine Konstante im Bereich zwischen 2 und 4, vorzugsweise bei 3 sind.

**Claims**

1. A liquid separator for separating liquid components entrained in a two-phase flow (gas liquid), in which the flow is conveyed through a duct comprising pockets for trapping the liquid components, baffle plates being disposed in front of the pockets and ending in flow-separation edges for the liquid, the flow-separation edge (18) of each baffle plate (14) being disposed at a distance (b) in front of the overflow edge (17) of the associated pocket (12), characterised in that the end of each baffle plate (14) is so curved in the direction into the pocket (12) so that the tangent (t) to the flow-separation edge (18) of the baffle plate (14) points into the pocket (12), the speed is substantially constant at least in the region of the opening between the baffle plate and the pocket, and the baffle plate (14) at its end comprising the flow separation edge (18), has a bend (16) with a length (1), the maximum of which is calculated from the equation

$$l_{max} = \dot{m} \cdot \frac{h}{\eta} \cdot \ln \frac{u\,(0)}{u\,(1)}$$

where u (O) is the average speed of the film in front of the bend, u (1) is the average film speed at the flow-separation edge, $2.5 < u\,(O)/u\,(1) \leq 3.5$, rh is the mass flow per unit width, h is the average film thickness and $\eta$ is the dynamic viscosity of the liquid, and the effective length (1) of the bend (16) is in the range

$0.2\ l_{max} < 1 \leq l_{max}$.

2. A liquid separator according to claim 1, characterised in that the bend (lt) deviates from the flow direction by an average angle ($\beta$) in the range between 7° and 13°, preferably 10°.

3. A liquid separator according to claim 2, characterised in that the bend (16) extends with at radius of curvature

$$R = \frac{1}{2 \sin \beta}$$

from the wall.

4. A liquid separator according to claim 2 or 3, characterised in that the spacing (b) between the flow-separation edge (18) and the edge (17) of the inlet opening of the pocket (12) is determined by the relation

$$b = K^2 \sin \beta \sqrt{1}$$

where K is a constant in the range between 4 and 6 and preferably has the value 5.

5. A liquid separator according to any of claims 1 to 4, characterised in that the duct width (s) is calculated from the expression

$$s = \sqrt{\frac{f \cdot v \cdot T \cdot \alpha}{18 \cdot \eta_G}} \cdot d_{limit}$$

where
v = speed of oncoming flow
$\alpha$ = turn angle
T = spacing of section members
$\phi$ = density of liquid
$\eta_G$ = dynamic viscositiy of the gas and
$d_{limit}$ = desired limiting drop diameter.

6. A liquid separator according to any of claims 1 to 5, characterised in that the duct is formed between adjacent parallel vertical section members having a number of successive turns (15) and pockets (12), and the first pocket (13) in the direction of flow does not have a baffle plate.

7. A liquid separator according to claim 6, characterised in that each section member has a thick portion (40) at the outlet edge to avoid flow separation of the gas phase in the outlet region.

8. A liquid separator according to claim 7, characterised in that the thick portion (40) has at least one capillary drainage system (42).

9. A liquid separator according to any of claims 1 to 8, characterised in that the duct wall opposite the bend (16) has a kink extending into the duct (at 19) to avoid flow separation of the gas phase in the bend.

10. A liquid separator according to any of claims 6 to 9, characterised in that a bead (30) is provided in the flow direction behind each pocket (12) for connecting successive sectional parts (20, 22, 24a, 24b) of a duct wall and for additionally draining separated liquid.

11. A liquid separator according to claim 10, characterised in that a capillary drainage system (32) for improving the drainage of liquid is provided in the bead (30).

12. A liquid separator according to any of claims 6 to 11, characterised in that it is constructed in a modular system from a total of three different sheet-metal or plastics sectional parts (20, 22, 24a, 24b), i.e. an inlet part (20), an outlet part (24a, 24b), and an intermediate part (22), which can multiple in a multiple-step construction.

13. A liquid separator according to claim 8 to 11, characterised in that the capillary drainage system (32, 34) comprises an inwardly tapering gap (35, 45).

14. A liquid separator according to claim 1 or any of claims 6 to 13, characterised in that when the pocket (12') is disposed on a concave side (14') of the duct, the distance (b') between the flow-separation edge (18') and the edge (17') is calculated from the equation

$b' = R' \cdot \sin \beta'\ (1 + 1/K')$

where
R' = radius of curvature of the outer turn,
$\beta'$ = the angle between the tangent (t') to the flow-separation edge and the direction of flow after the turn, the angle being in the range between 10° and 20°, preferably 15°, and
K' = a constant in the range between 2 and 4, preferably 3.

**Revendications**

1. Séparateur de liquide pour séparer l'une de l'autre des portions de liquide entraînées dans un flux constitué de deux phases (gaz/liquide), dans lequel le flux est dirigé dans un canal présentant des poches de capture pour les portions liquides, étant précisé qu'en amont des poches de capture sont disposées des tôles directrices qui présentent à leurs extrémités des arêtes de décollement pour le liquide, étant précisé que l'arête de décollement (18) de chaque tôle directrice (14) est située à une certaine distance (b) de l'arête de reprise (17) de la poche de capture correspondante (12), caractérisé par le fait que l'extrémité de chaque tôle directrice (14) pénètre dans la poche de capture (12) en se cintrant dans une direction telle que la tangente (t) à l'arête de décollement (8) de la tôle directrice (14) pénètre dans la poche de capture (12), que la vitesse est sensiblement constante au moins dans la zone de l'ouverture située entre la tôle directrice et la poche de capture et que la tôle directrice (14) présente, à son extrémité correspondant à l'arête de décollement (18), un cintrage vers l'intérieur (16) d'une longueur (1) dont la valeur maximale résulte de l'équation

$$l_{max} = \dot{m} \cdot \frac{h}{\eta} \cdot \ln \frac{u\,(0)}{u\,(1)}$$

où u (0) est la vitesse moyenne du film avant le cintrage vers l'intérieur et u (1) est la vitesse moyenne du film à l'arête de décollement et $2,5 < u\,(0)/u\,(1)' \leq 3,5$ $\dot{m}$ est le débit massique spécifique de la largeur, h est l'épaisseur moyenne du film et $\eta$ est la viscosité dynamique du liquide et étant précisé que la longueur indiquée (l) du cintrage vers l'intérieur (16) se situe sur la plage

$0,2\ l_{max} < 1 \leq l_{max}$

2. Séparateur de liquide selon la revendication 1, caractérisé par le fait que le cintrage vers l'intérieur (lt) s'écarte, par cintrage, de la direction du flux d'un angle moyen ($\beta$) qui vaut entre 7° et 13°, de préférence 10°.

3. Séparateur de liquide selon la revendication 2, caractérisé par le fait que le cintrage vers l'intérieur (16) s'écarte de la paroi, par cintrage, avec un rayon de courbure de

$$R = \frac{1}{2\sin\beta}$$

4. Séparateur de liquide selon la revendication 2 ou 3, caractérisé par le fait que la distance (b) entre l'arête de décollement (18) et l'arête (17) de l'ouverture d'entrée de la poche de capture (12) se déduit de la relation

$$b = K^2 \sin\beta \sqrt{1}$$

où K est une constante qui vaut entre 4 et 6 et de préférence 5.

5. Séparateur de liquide selon l'une des revendications 1 à 4, caractérisé par le fait que la largeur du canal (s) se déduit de la relation

$$s = \sqrt{\frac{f \cdot v \cdot T \cdot \alpha}{18 \cdot \eta_G}} \cdot d_{lim}$$

avec
v - vitesse d'arrivée du flux,
$\alpha$ - angle de changement de direction,
T - pas des profilés,
$\vartheta$ - densité du liquide,

$\eta_G$ - viscosité dynamique du gaz,
$d_{lim}$ - diamètre limite désiré des gouttes.

6. Séparateur de liquide selon l'une des revendications 1 à 5, caractérisé par le fait que le canal est réalisé entre des profilés voisins, parallèles, disposés verticalement avec plusieurs changements de direction (15) et poches de capture (12) qui se suivent, et par le fait que la première poche de capture (13) vu dans le sens du flux, ne présente pas de tôle directrice.

7. Séparateur de liquide selon la revendication 6, caractérisé par le fait que chaque profilé présente, à l'arête de sortie, un renfort (40) pour éviter des décollements du flux de la phase gazeuse dans la zone de sortie.

8. Séparateur de liquide selon la revendication 7, caractérisé par le fait que le renfort (40) présente au moins un drainage capillaire (42).

9. Séparateur de liquide selon l'une des revendications 1 à 8, caractérisé par le fait que la paroi du canal située en face du cintrage vers l'intérieur (16) est crénelée vers l'intérieur du canal (en 19), pour empêcher des décollements du flux de la face gazeuse le long du cintrage vers l'intérieur.

10. Séparateur de liquide selon l'une des revendications 6 à 9, caractérisé par le fait que chaque poche de capture (12), vu dans le sens du flux, est prévu un soyage (30) pour relier les pièces profilées/disposées l'une derrière l'autre (20, 22, 24a, 24b), d'une paroi du canal et pour assurer une évacuation complémentaire du liquide séparé.

11. Séparateur de liquide selon la revendication 10, caractérisé par le fait que dans le soyage (30) est prévu un drainage capillaire (32) pour améliorer l'évacuation du liquide.

12. Séparateur de liquide selon l'une des revendications 6 à 11, caractérisé par le fait qu'il est constitué, dans un système modulaire, d'au total trois pièces profilées différentes de tôle ou de plastique (20, 22, 24a, 24b), à savoir une pièce d'entrée (20), une pièce de sortie (24a, 24b) et une pièce intermédiaire (22), qui s'emploie plusieurs fois dans le cas d'une réalisation à plusieurs étages.

13. Séparateur de liquide selon la revendication 8 ou 11, caractérisé par le fait que le drainage capillaire (32, 42) présente une fente (35, 45) qui va en se rétrécissant vers l'intérieur.

14. Séparateur de liquide selon la revendication 1 ou selon l'une des revendications 6 à 13, caractérisé par le fait que dans le cas où la poche de capture (12') est disposée du côté concave (14') du canal, la distance (b') entre l'arête de décollement (18') et l'arête (17') se déduit de la relation

$b' = R'\ \lambda\ \sin\beta, (1 + 1/K')$

où
R' – rayon de courbure du changement de direction extérieur,
$\beta'$ – angle entre la tangente (t') à l'arête de décollement et la direction du flux après le changement de direction, valant entre 10° et 20°, de préférence 15°,
K' – constante valant entre 2 et 4, de préférence 3.

# Fig.1

# Fig.2

# Fig.3

# Fig.4

# Fig.5

Fig.6

Fig.7

Fig.8

Fig.9

Fig.10

Fig.11

Fig.12

Fig.13

Fig.14